# FASCICULE DE BREVET EUROPEEN

(11) **EP 0 253 748 B1**
(45) Date de publication et mention de la délivrance du brevet: **24.11.1993**
(21) Numéro de dépôt: 87420191.6
(22) Date de dépôt: 03.07.1987
(51) Int. Cl.: F16K 15/20, F16K 15/14

(54) **Valve monobloc pour enceinte fermée, son procédé de fabrication et moyens pour la mise en oeuvre de ce procédé**
Einstückiges Ventil für einen geschlossenen Behälter, Verfahren für seine Herstellung und Mittel zur Anwendung dieses Verfahrens
One piece valve for a closed receptacle, its manufacturing process and means for executing this process

(30) Priorité: 17.07.1986 CH 2857/86; 22.07.1986 CH 2929/86
(43) Date de publication de la demande: 20.01.1988
(73) Titulaire: MONNERET JOUETS, F-39002 Lons-le-Saunier (FR)
(72) Inventeur: Verlier, Jacques, CH-1206 Geneve (CH)
(74) Mandataire: Guerre, Dominique

(56) Documents cités:
- DE-C- 281 431
- DE-C- 387 190
- FR-A- 1 241 520
- US-A- 1 942 959
- US-A- 2 219 190
- US-A- 2 760 775
- US-A 2 604 297
- US-A 2 589 716
- US-A 4 240 630

## Description

La présente invention a pour objet une valve monobloc pour enceinte fermée, son procédé de fabrication et les moyens pour la mise en oeuvre de ce procédé.

Les valves pour enceinte fermée telle que, notamment, enceinte gonflable, que l'on connaît comportent des éléments qui constituent un corps étranger à l'enceinte et dont, le plus souvent, une partie fait saillie à l'extérieur de l'enceinte. Les valves pour ballons gonflables comportant une vessie, que l'on connaît, en particulier pour les ballons constitués d'une vessie en matière synthétique moulée à chaud, comportent un orifice destiné au gonflage de la vessie. Cet orifice est généralement agencé dans un dispositif qui constitue un corps étranger à la vessie et que l'on doit fixer au préalable dans le moule, avant le moulage, de façon qu'il soit enrobé par la vessie et en prenant garde que l'entrée et la sortie de l'orifice soient préservées.

Ce dispositif présente l'inconvénient de ne permettre que le gonflage de la vessie et non pas son dégonflage. En outre, la procédure de gonflage est délicate de sorte que le gonflage des ballons est le plus souvent réalisé en usine. Du fait que les ballons ne peuvent pas être dégonflés, leur transport et leur entreposage nécessitent des volumes importants.

On connaît, par le brevet générique US 4 240 630, une valve monobloc pour enceinte fermée, conformée dans l'épaisseur même d'une partie de paroi de l'enceinte et constituée d'une matière synthétique coulée à chaud, l'enceinte étant destinée à recevoir et retenir un fluide sous pression.

Cependant, la partie de cette valve monobloc qui enforme le clapet de fermeture se présente sous la forme d'une saillie intérieurement radiale de l'enceinte dont on ne voit pas comment, lorsque cette valve est réalisée de manière monobloc avec la paroi de l'enceinte, elle peut être obtenue par moulage avec cette enceinte, car aucun élément, dans ce document, n'indique le procédé de fabrication de cette valve.

Le but de la présente invention est de proposer une valve monobloc pour enceinte fermée et notamment, quoique non exclusivement, pour enceinte gonflable et, en particulier, pour ballon gonflable comportant une vessie, la valve ne présentant aucun élément en saillie à la surface extérieure de l'enceinte et permettant le gonflage et le dégonflage de l'enceinte à tout moment.

A cet effet, l'invention concerne une valve monobloc pour enceinte fermée, telle que définie à la revendication 1. Elle concerne aussi une enceinte gonflable et, notamment un ballon gonflable comportant une vessie tel que défini à la revendication 5. Elle concerne également un procédé de fabrication d'une valve tel que défini aux revendications 6 et 7 et les moyens pour sa mise en oeuvre tels que définis à la revendication 9.

L'invention sera bien comprise à l'aide de la description qui suit, en référence au dessin schématique annexé représentant, à titre d'exemple non limitatif, une forme d'exécution de cette valve dans le cas de son application à un ballon :
Figure 1 est une vue partielle en coupe radiale d'un ballon gonflable comportant une vessie munie d'une valve selon l'invention, avant gonflage de la vessie ;
Figure 2 est une vue partielle en coupe radiale du ballon de figure 1, la vessie étant en tension après gonflage du ballon ;
Figure 3 est une vue partielle en coupe radiale d'une variante de la valve selon l'invention ;
Figure 4 est une vue en perspective d'un exemple de dispositif destiné à être vissé dans le moule avant le moulage de l'enceinte, de façon à permettre la réalisation d'une valve par moulage.

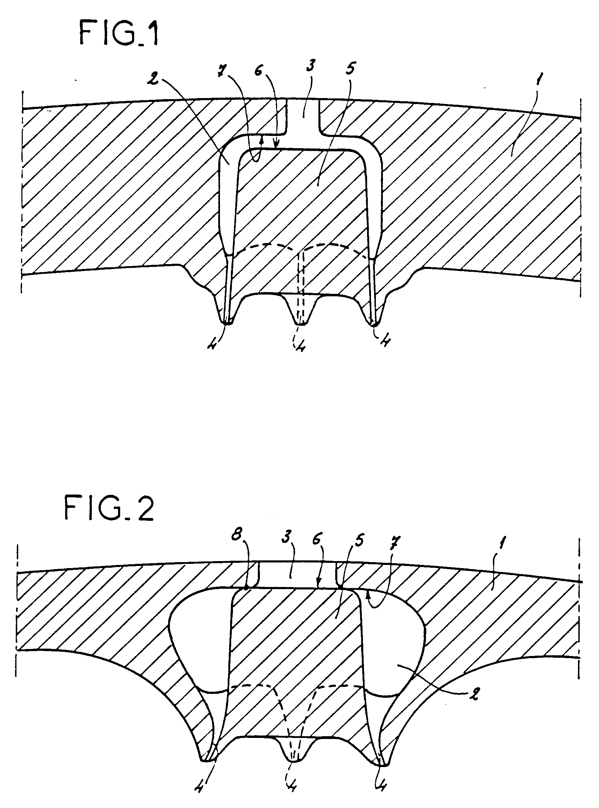

Comme représenté sur la figure 1, le ballon comprend une vessie 1 comportant une valve réalisée dans l'épaisseur de la vessie. La valve comprend une cavité interne 2 communiquant avec l'extérieur de la vessie par un trou 3 et avec l'intérieur de la vessie par quatre trous 4. Un élément de soupape 5 faisant corps, à sa partie inférieure, avec la vessie, occupe la partie centrale de la cavité 2. Il comporte une partie frontale supérieure 6 située en face de la paroi interne supérieure 7 de la cavité. Le trou 3 est situé dans la partie centrale de la paroi supérieure 7 de la cavité.

Lorsqu'on gonfle le ballon, la vessie se tend, son épaisseur diminue, la section du trou 3 augmente, de même que la largeur de la cavité 2. Par contre, les dimensions de l'élément de soupape 5 restent sensiblement inchangées, l'élément de soupape n'étant soumis qu'à une tension de peu d'importance dans sa partie de base. Il s'ensuit que, la hauteur de l'élément de soupape restant pratiquement inchangée et l'épaisseur de la vessie diminuant, la partie frontale supérieure 6 de l'élément de soupape va s'appuyer contre la paroi interne supérieure 7 de la cavité.

Comme on peut le voir sur la figure 2, les dimensions de la section du trou 3 sont choisies de sorte que, lorsque la vessie est en tension, les dimensions de la section augmentée du trou 3 soient plus petites que celles de la surface frontale 6 de l'élément de soupape et qu'au moins une partie de la surface frontale 6 s'appuie contre la paroi supérieure 7 de la cavité de façon à réaliser une surface de contact 8 continue autour du trou 3 et à empêcher le dégonflage du ballon. Du fait de la tension importante de la vessie lorsque le ballon est gonflé, les conduits des trous 4 sont déformés, cette déformation contribuant, dans une certaine mesure, à la bonne étanchéité de la valve. Pour dégonfler le ballon, il suffit d'introduire un objet de forme adéquate à l'intérieur du trou 3 et d'apppuyer sur la surface frontale 6 de l'élément de soupape et, éventuellement, d'imprimer un mouvement de torsion à l'élément de soupape de façon à dégager les trous 4, ce qui permet à l'air contenu à l'intérieur de la vessie de s'échapper en passant par les trous 4, la cavité 2 et le trou 3.

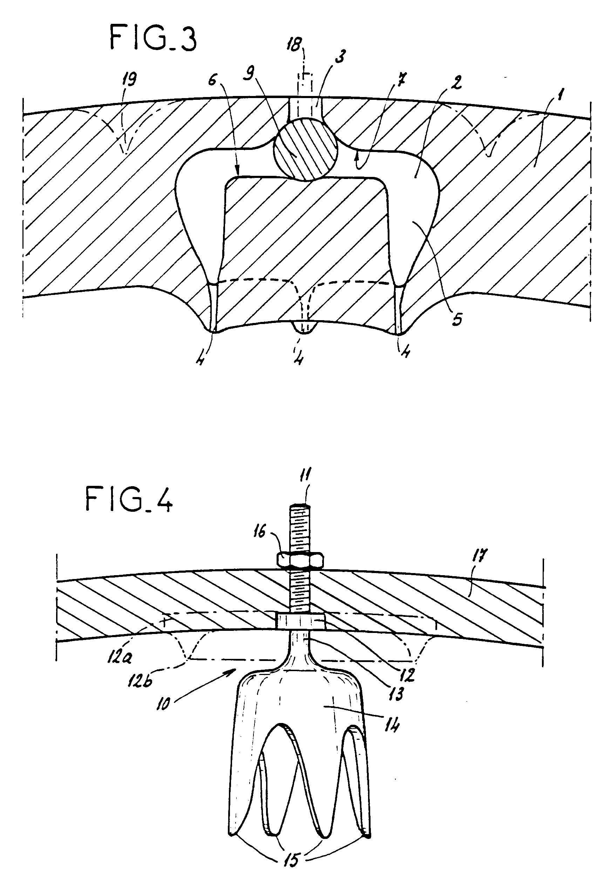

Selon un mode de fabrication préférentiel, la valve est réalisée par moulage lors du moulage de la vessie. On a représenté, à la figure 4, à titre d'exemple, un dispositif 10 destiné à être vissé dans le moule et permettant le moulage de la valve. Le dispositif 10 comprend une tige filetée 11, un disque 12 de diamètre supérieur à celui de la tige 11 et situé à l'une des extrémités de la tige 11, et un élément de tige 13 situé de l'autre côté du disque 12 et se prolongeant par un élément en forme de cloche 14. La tige 11, le disque 12, la tige 13 et l'élément en forme de cloche 14 sont coaxiaux et constituent un ensemble en une seule pièce. La paroi de l'élément en forme de cloche est mince et comporte quatre découpures conformées de façons à constituer quatre parties saillantes 15. La tige filetée 11 du dispositif est destinée à être introduite dans un trou du moule 17 avant le moulage de la vessie, un écrou 16 permettant le blocage du dispositif sur le moule. Le dispositif permet la constitution de la valve lors du moulage de la vessie. la tige 13, la cloche 14 et les parties saillantes 15 permettent, respectivement, la constitution du trou 3, de la cavité 2 et des trous 4 de la valve, la matière qui se loge à l'intérieur de la cloche lors du moulage constituant l'élément de soupape 5.

Lorsque le moulage de la vessie est terminé, on effectue le démoulage de la vessie en séparant simplement le moule de la vessie, le dispositif 10, qui reste fixé sur le moule, se retirant très facilement de la vessie. La valve est alors constituée.

La description qui précède se réfère à un ballon gonflable comportant une vessie munie d'une valve selon l'invention. Bien entendu, la valve de l'invention peut être réalisée dans l'épaisseur de toute enceinte ou partie d'enceinte que l'on désire remplir d'air comme, par exemple, un bateau gonflable ou une bou ée gonflable. Lorsqu'il s'agit d'enceinte constituée en un matériau peu élastique, il peut être utile de munir la valve d'un élément d'obturation supplémentaire.

Dans l'exemple représenté à la figure 3, la valve comporte une bille 9, par exemple en caoutchouc, en matière synthétique, en acier ou en tout autre métal, de diamètre supérieur au diamètre du trou 3 lorsque la vessie est en tension. Cette bille est disposée à la base du trou 3, sur la surface frontale 6 de l'élément de soupape, de façon à être comprimée entre la partie de la paroi supérieure 7 de la cavité située à la base du trou 3 et la surface frontale 6 de l'élément de soupape, lorsque l'enceinte est en tension.

Dans une variante visant à faciliter le dégonflage de l'enceinte, l'élément en forme de bille 9 peut être équipé d'une tige de manoeuvre 18 traversant le premier trou 3 de manière à être accessible depuis l'extérieur de l'enceinte, comme représenté en traits mixtes sur la figure 3.

Comme illustré en traits mixtes sur la figure 4, le disque 12 qui entoure le pied de la tige de fixation 11 de la partie en cloche 14 peut être remplacé par un disque 12a formant une collerette annulaire de diamètre plus grand que celui du disque 12 et dont la face tournée vers l'intérieur de l'enceinte porte une nervure annulaire 12b destinée à créer, dans la paroi de l'enceinte, lors de son moulage, une rainure annulaire 19 de section transversale complémentaire de celle de la nervure 12b et qui est représentée en traits mixtes sur la figure 3. Cette rainure 19 confère à la partie correspondante de la paroi de l'enceinte, c'est-à-dire celle qui renferme la valve, une meilleure régularité d'épaisseur.

La valve qui vient d'être décrite peut également être réalisée par moulage d'un élément de surface réduite, cet élément de surface étant ensuite fixé, par exemple par collage ou soudage, sur toute enceinte, gonflable ou non, comme par exemple un bateau gonflable ou une bouée gonflable, un vaporisateur ou un tube contenant un produit pâteux à distribuer par petites doses. Dans ce dernier cas, la valve a pour fonction l'introduction indésirable de produits dans le tube, postérieurement à son remplissage.

## Revendications

1. Valve monobloc pour enceinte fermée, destinée à recevoir et retenir un fluide sous pression, du type conformée dans l'épaisseur même d'une partie de paroi de l'enceinte (1) constituée d'une matière synthétique coulée à chaud, caractérisée en ce qu'elle comporte une cavité intérieure (2) communiquant avec l'extérieur de l'enceinte par l'intermédiaire d'un premier trou (3) et avec l'intérieur de l'enceinte par au moins un second trou (4), et un élément de soupape (5) faisant corps avec l'enceinte (1) et occupant la partie centrale de la cavité (2).

2. Valve selon la revendication 1, caractérisée en ce que l'élément de soupape présente une surface frontale (6) opposée à la paroi supérieure (7) de la cavité située autour du premier trou (3), et en ce que la section du premier trou est telle que, lorsque la partie de paroi de l'enceinte (1), dans laquelle elle est conformée, est en tension, la section du premier trou ayant augmenté, les dimensions de la surface frontale (6) de la soupape (5) sont supérieures à la section augmentée du premier trou (3), la surface frontale (6) de la soupape (5) s'appuyant contre la partie de paroi (7) de la cavité entourant le premier trou (3), de façon à présenter une surface de contact (8) continue autour de ce trou et à empêcher le passage à travers le premier trou d'un flux du fluide contenu dans l'enceinte (1).

3. Valve selon la revendication 2, caractérisée en ce qu'un élément (9) en forme de bille, de dimensions extérieures supérieures à la section du premier trou (3), éventuellement dilaté, est disposé à l'interface du premier trou (3) et de la surface frontale (6) de l'élément de soupape (5), ce dernier et la partie de paroi (7) de la cavité qui entoure le premier trou (3) s'appuyant contre cet élément (9) de façon à empêcher le passage, à travers le premier trou (3), d'un flux du fluide contenu dans l'enceinte (1).

4. Valve selon la revendication 3, caractérisée en ce que l'élément (9) disposé à l'interface du premier trou (3) et de la surface frontale (6) de l'élément de soupape (5) est muni d'une tige de manoeuvre (18) traversant le premier trou (3) et actionnable depuis l'extérieur de l'enceinte.

5. Ballon gonflable comportant une vessie, caractérisé en ce qu'il est équipé d'une valve selon l'une des revendications 1 à 4.

6. Procédé de fabrication d'une valve selon l'une quelconque des revendications 1 à 4, caractérisé en ce que la valve est moulée dans l'épaisseur même de la paroi ou partie de paroi de l'enceinte, lors du moulage de cette paroi ou partie de paroi.

7. Procédé selon la revendication 6, caractérisé en ce qu'on effectue le moulage de la paroi ou partie de paroi de l'enceinte dans un moule dans lequel est fixé un dispositif (10) conformé de façon à réaliser la valve par moulage, et l'on effectue le démoulage avant le refroidissement de l'enceinte.

8. Moyens pour la mise en oeuvre du procédé selon la revendication 6 ou la revendication 7, caractérisés en ce qu'ils comprennent un dispositif (10) comportant une tige filetée (11) destinée à être vissée dans le moule (17) avant le moulage et faisant corps avec une partie en forme générale de cloche (14) destinée à constituer une cavité dans l'épaisseur de la paroi ou partie de paroi de l'enceinte lors du moulage, partie en forme de cloche comportant au moins une partie saillante (15) destinée à constituer un canal de communication entre la cavité et la surface intérieure de la paroi ou partie de paroi de l'enceinte après démoulage.

9. Moyens selon la revendication 8, caractérisés en ce que le dispositif (10) comporte une collerette annulaire (12a) apte à être placée dans un logement prévu pour la recevoir dans la face intérieure du moule (17) et présentant une nervure annulaire (12b) créant, dans la paroi de l'enceinte, une rainure annulaire lui conférant une meilleure régularité d'épaisseur dans la partie comprenant la valve.

## Claims

1. One-piece valve for a closed enclosure intended to receive and to retain a pressurized fluid, of the type made in the very thickness of a part of a wall of the enclosure (1) made of a hot-moulded synthetic material, characterized in that it comprises an inside cavity (2) communicating with the outside of the enclosure by means of a first hole (3) and with the inside of the enclosure by at least a second hole (4), and a valve element (5) which is integral with the enclosure (1), and occupies the central part of the cavity (2).

2. Valve according to Claim 1, characterized in that the valve element has a front surface (6) opposite the upper wall (7) of the cavity located around the first hole (3), in that the section of the first hole is such that when the part of a wall of the enclosure (1) in which it is made is taut, the section of the first hole having increased, the dimensions of the front surface (6) of the valve (5) are greater than the increased section of the first hole (3), the front surface (6) of the valve (5) resting against the part of a wall (7) of the cavity surrounding the first hole (3) to present a continuous contact surface (8) around this hole and to prevent a flow of the fluid contained in the enclosure (1) from passing through the first hole.

3. Valve according to Claim 2, characterized in that a ball-shaped element (9), of outside dimensions greater than the section of the first hole (3), possibly expanded, is located at the interface of the first hole (3) and of the front surface (6) of the valve element (5), the latter and the part of a wall (7) of the cavity which surrounds the first hole (3) resting against this element (9) to prevent a flow of the fluid contained in the enclosure (1) from passing through the first hole (3).

4. Valve according to Claim 3, characterized in that the element (9) located at the interface of the first hole (3) and of the front surface (6) of the valve element (5) is equipped with a manoeuvring rod (18) passing through the first hole (3) and which can be passing through the first hole (3) and which can be actuated from the outside of the enclosure.

5. Inflatable balloon comprising a bladder, characterized in that it is equipped with a valve according to one of Claims 1 to 4.

6. Production process for a valve according to any one of Claims 1 to 4, characterized in that the valve is moulded in the very thickness of the wall or part of a wall of the enclosure, when moulding this wall or part of a wall.

7. Process according to Claim 6, characterized in that the wall or part of a wall of the enclosure is moulded in a mould in which is fastened a device (10) shaped to produce the valve by moulding, and removal from the mould is performed before the enclosure is cooled.

8. Means for using the process according to Claim 6 or Claim 7, characterized in that they comprise a device (10) comprising a threaded rod (11) intended to be screwed into the mould (17) before moulding and being integral with a generally bell-shaped part (14) intended to constitute a cavity in the thickness of the wall or part of a wall of the enclosure during moulding, the bell-shaped part comprising at least one projecting part (15) intended to constitute a communication channel between the cavity and the inside surface of the wall or part of a wall of the enclosure after removal from the mould.

9. Means according to Claim 8, characterized in that the device (10) comprises an annular flange (12a) which can be placed in a housing provided to receive it in the inside face of the mould (17) and presenting an annular rib (12b) creating, in the wall of the enclosure, an annular groove giving better uniform thickness in the part comprising the valve.

## Patentansprüche

1. Einstückiges Ventil für einen geschlossenen Behälter, der zur Aufnahme oder zum Speichern eines Fluides unter Druck vorgesehen ist, derart, daß seine Dicke der Dicke eines Bereiches der Wand des Behälters (1) angepaßt ist, der aus einem heiß gegossenen synthetischen Material besteht, dadurch gekennzeichnet, daß es einen inneren Hohlraum (2) umfaßt, der mit dem Äußeren des Behälters über eine dazwischenliegende erste Öffnung (3) in Verbindung steht und mit dem Inneren des Behälters wenigstens über eine zweite Öffnung (4), und daß ein Ventilelement (5) mit dem Behälter (1) zusammenhängt, das den zentralen Bereich des Hohlraums (2) bedeckt.

2. Ventil gemäß Anspruch 1, dadurch gekennzeichnet, daß das Ventilelement eine Vorderfläche (6) aufweist, die der oberen Wand (7) des Hohlraums gegenüberliegt und die erste Öffnung (3) umschließt, und daS der Bereich der ersten Öffnung derart ist, daß wenn der Wandbereich des Behälters, in dem er gebildet ist, unter Spannung steht, nach der Vergrößerung des Bereiches der ersten Öffnung die Dimensionen der Vorderfläche (6) des Ventils (5) größer sind als der vergrößerte Bereich der ersten Öffnung (3), so daß sich die Vorderfläche (6) des Ventils (5) gegen die die erste Öffnung (3) einfassende Wandpartie (7) des Hohlraums derart anlehnt, so daß sich eine Kontaktfläche (8) um die Öffnung herum erstreckt, um den Durchlaß eines in dem Behälter (1) eingeschlossenen Fluides durch die erste Öffnung zu verhindern.

3. Ventil gemäß Anspruch 2, dadurch gekennzeichnet, daß ein Element (9) in Form einer Kugel mit äußeren Dimensionen, die größer als der Bereich der ersten Öffnung (3) sind, wenn sich diese möglicherweise ausgedehnt hat, zwischen der ersten Öffnung (3) und der Vorderfläche (6) des Ventilelementes (5) angeordnet ist, wobei sich das letztere und die Wandpartie (7) des Hohlraums, die die erste Öffnung (3) umschließt, sich an das Element (9) derart anlegen, daß der Durchlaß eines in dem Behälter (1) enthaltenden Fluides durch die Öffnung (3) verhindert wird.

4. Ventil gemäß Anspruch 3, dadurch gekennzeichnet, daß das Element (9) zwischen der ersten Öffnung (3) und der Vorderfläche (6) des Ventilelementes (5) angeordnet ist und mit einem Betätigungsstift (18) versehen ist, der sich durch die erste Öffnung (3) erstreckt und der von außerhalb des Behälters betätigbar ist.

5. Aufblasbarer Ballon mit einer Blase, dadurch gekennzeichnet, daß er mit einem Ventil gemäß einem der Ansprüche 1 bis 4 versehen ist.

6. Verfahren zur Herstellung eines Ventils gemäß einem der Ansprüche 1 bis 4, dadurch gekennzeichnet, daß das Ventil desselben in der Wand oder in einem Bereich der Wand des Behälters beim Gießen der Wand oder des Wandbereiches geformt wird.

7. Verfahren gemäß Anspruch 6, dadurch gekennzeichnet, daß das Gießen der Wand oder des Wandbereiches des Behälters in einer Gießform erfolgt, an der eine Vorrichtung (10) derart befestigt ist, daß das Ventil beim Gießen gebildet wird und daß man sie nach dem Abkühlen der Behälterwand herausnehmen kann.

8. Mittel zur Anwendung des Verfahrens gemäß Anspruch 6 oder 7, dadurch gekennzeichnet, daß es eine Vorrichtung (10) mit einem Gewindestift (11) zum Verschrauben mit der Form (17) vor dem Gießen umfaßt, der mit einem Bereich im wesentlichen in der Form einer Glocke (14) verbunden ist, um einen Hohlraum in der Erstreckung der Wand oder des Wandbereiches des Behälters beim Gießen zu erzielen, wobei der Bereich in Form der Glocke wenigstens einen hervorstehenden Bereich (15) umfaßt, um einen Verbindungskanal zwischen dem Hohlraum und der Innenfläche der Wand oder des Wandbereiches des Behälters nach dem Gießen zu bilden.

9. Mittel gemäß Anspruch 8, dadurch gekennzeichnet, daß die Vorrichtung (10) einen ringförmigen Kragen (12a) umfaßt, der an einer Stelle zur Aufnahme an der Innenfläche der Form (17) angeordnet sein kann und eine ringförmige Rippe (12b) bildet, die in der Wand des Behälters eine ringförmige Rille formt, die diesem in dem das Ventil umgebenden Bereich eine geringere als die normale Dicke verleiht.
